# EUROPÄISCHE PATENTSCHRIFT

(11) **EP 3 669 734 B1**
(45) Veröffentlichungstag und Bekanntmachung des Hinweises auf die Patenterteilung: **03.02.2021**
(21) Anmeldenummer: 18213001.3
(22) Anmeldetag: 17.12.2018
(51) Int. Cl.: A47L 9/14, B01D 39/16

(54) **STAUBSAUGERFILTERBEUTEL MIT VERBESSERTER SCHWEISSNAHTFESTIGKEIT**
VACUUM CLEANER FILTER BAG WITH IMPROVED WELD SEAM STRENGTH
SAC FILTRANT D'ASPIRATEUR À RÉSISTANCE DE CORDON DE SOUDURE AMÉLIORÉE

(43) Veröffentlichungstag der Anmeldung: 24.06.2020
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(56) Entgegenhaltungen:
- EP-A1- 2 944 247
- EP-A1- 3 219 374
- WO-A1-2017/158026
- WO-A1-2018/065164

## Beschreibung

Die Erfindung betrifft einen Staubsaugerfilterbeutel, insbesondere einen Staubsaugerfilterbeutel mit einer Beutelwand, die wenigstens teilweise aus recycliertem Material hergestellt ist.

Besonders nachhaltige und umweltfreundliche Staubsaugerfilterbeutel lassen sich unter Verwendung von Textilabfällen (TLO, Textil Left-Over) und/oder recyclierten Kunststoffen herstellen. Beispiele für solche Filterbeutel sind in der WO 2018/065164 A1 und der WO 2017/158026 A1 offenbart.

Bei solchen Staubsaugerfilterbeuteln ist es unumgänglich, dass sowohl innerhalb einer Lage als auch von Lage zu Lage des Vliesstofflaminats unterschiedliche und inhomogene Grundstoffe Verwendung finden. Beispielsweise werden Stützlagen häufig aus recycliertem Polyethylenterephthalat, rPET, gebildet, während die Feinfilterlage beispielsweise Polypropylen, PP mit einem hohen Meltflowindex und die Kapazitätslage TLO aufweist. Um einen möglichst hohen Anteil an recyclierten Kunststoffen zu erreichen, wird häufig mit einer möglichst leichten Feinfilterlage gearbeitet.

Um die einzelnen Lagen miteinander zu verbinden, wird üblicherweise eine Ultraschallschweißnaht erzeugt. Dabei werden longitudinale Schwingungen mit Frequenzen von 20 kHz bis 35 kHz und Werkzeugamplituden von 5 µm bis 50 µm unter Druck in die zu verbindenden Vliesstoffe eingeleitet. Die durch die Schwingungen entstehende Reibungswärme schmilzt das Material des Vliesstoffes auf. Nach Beenden der Schalleinleitung muss das Material unter dem noch anstehenden Druck zur Verfestigung noch kurz abkühlen. So entsteht in kurzer Zeit eine belastbare Schweißnaht.

Allerdings haben Vliesstoffe eher ungünstige Übertragungseigenschaften für Ultraschallenergie. Vliesstoffe mit vielen Poren haben strukturbedingt einen hohen akustischen Dämpfungsfaktor. Für gute Schweißergebnisse ist es daher notwendig, dass die zu verbindenden Materialien möglichst aufeinander abgestimmt sind, sowohl hinsichtlich der Schmelzpunkte als auch des chemischen Charakters (amorph/teilkristallin). Dies ist nicht immer möglich und erweist sich insbesondere bei den oben erwähnten umweltfreundlichen Staubsaugerfilterbeuteln aus recyclierten Materialien als schwierig.

Zur Verbesserung der Schweißnahtfestigkeit wurden bereits verschiedene Ansätze untersucht.

Die DE 20 300 781 U1 offenbart beispielsweise Materialstreifen aus einem thermoplastischen Material, welche beliebig angeordnet sein können und die Verbindungsnaht verstärken sollen. Derartige Materialstreifen sind jedoch nur schwer in Längs- und insbesondere in Querrichtung zu positionieren.

Die EP 2 944 247 A1 offenbart Strukturen und Dimensionen für Beutelnähte, die, insbesondere bei hohen Flächengewichten, gute Festigkeitswerte erreichen.

Keine der vorgeschlagenen Lösungen bietet jedoch bei Staubsaugerfilterbeuteln aus unterschiedlichen recyclierten Materialien eine fertigungsfreundliche Lösung, die für eine gute Schweißnahtfestigkeit sorgt.

Aufgabe der Erfindung ist es daher, einen Staubsaugerfilterbeutel bereitzustellen, dessen Beutelwand mit nachhaltigen Kunststoffen gefertigt ist, und dessen Schweißnähte eine ausreichende Festigkeit aufweisen.

Diese Aufgabe wird durch einen Staubsaugerfilterbeutel gemäß Anspruch 1 gelöst. Besonders vorteilhafte Weiterbildungen finden sich in den Unteransprüchen.

Die Erfinder haben überraschenderweise festgestellt, dass durch eine Zwischenlage aus einem Vliesstoff oder einem Faservlies, der bzw. das recycliertes Polypropylen, rPP, als Hauptkomponente umfasst eine wesentliche Verbesserung der Schweißnahtfestigkeit erreicht werden kann. Die Zwischenlage führt insbesondere dazu, dass sich die Stützlage bzw. die Kapazitätslage besser mit der Feinfilterlage verbindet und so die Höchstzugkraft der Schweißnähte steigt. Die Schmelze der Zwischenlage, die rPP umfasst, fungiert dabei als Schweißvermittler zwischen den Lagen.

Wenn eine Zwischenlage zwischen der Stützlage und der Feinfilterlage und auch eine Zwischenlage zwischen der Feinfilterlage und der Kapazitätslage angeordnet ist, kann die Zwischenlage zwischen der Stützlage und der Feinfilterlage als "erste Zwischenlage" und die Zwischenlage zwischen der Feinfilterlage und der Kapazitätslage als "zweite Zwischenlage" bezeichnet werden. Die Zwischenlagen können einander entsprechende Merkmale aufweisen. Im Folgenden wird daher auch auf "wenigstens eine Zwischenlage" Bezug genommen. Die entsprechenden Merkmale können dann auf eine oder auf alle Zwischenlagen zutreffen. Es können auch noch weitere Zwischenlagen als die beiden hier genannten vorgesehen sein. Gemäß einem ersten Beispiel kann es sich bei der Stützlage um einen Filamentspinnvliesstoff (auch kurz "Spinnvliesstoff" oder "Spunbond"), der aus rPET besteht, als Außenlage der Beutelwand handeln und bei der Feinfilterlage um einen Meltblown-Vliesstoff, der aus virgin PP (Neumaterial) besteht. Die Kapazitätslage kann in diesem Beispiel TLO umfassen.

Der Ausdruck "als Hauptkomponente umfasst" bedeutet, dass das Material der wenigstens einen Zwischenlage mehr als 50%, insbesondere mehr als 70%, insbesondere mehr als 90% rPP umfasst, oder dass das Material der Zwischenlage aus rPP besteht. Der Ausdruck wird hierin auch für weitere Teile des Staubsaugerfilterbeutels verwendet. In diesen Fällen bedeutet er entsprechend, dass das Material des jeweiligen Teils mehr als 50%, insbesondere mehr als 70%, insbesondere mehr als 90% des angegebenen Kunststoffs umfasst, oder dass das Material des jeweiligen Teils aus dem angegebenen Kunststoff besteht.

Der für die Zwecke der vorliegenden Erfindung verwendete Begriff "recyclierter Kunststoff" ist dabei synonym zu verstehen zu "Kunststoffrecyclaten". Zur begrifflichen Definition wird hierbei auf die Norm DIN EN 15347: 2007 verwiesen.

Die Beutelwand des Staubsaugerfilterbeutels umfasst also ein luftdurchlässiges Material, das mehrlagig aufgebaut ist. Man spricht auch von einem Laminat. Durch Einsatz von recycliertem Kunststoff wenigstens in der Stützlage, der Kapazitätslage und der wenigsten einen Zwischenlage wird in ökologischer Hinsicht ein deutlich vorteilhafter Filterbeutel bereitgestellt. Im Gegensatz zu aus dem Stand der Technik bekannten Staubsaugerfilterbeuteln wird somit weniger oder gar kein frisches/reines (virgin) Kunststoffmaterial zur Herstellung der der Beutelwand des Staubsaugerfilterbeutels zu Grunde liegenden Vliesstoffe bzw. Faservliese verwendet, sondern es gelangen überwiegend oder ausschließlich Kunststoffe zum Einsatz, die bereits in Verwendung waren und durch entsprechende Recyclingverfahren wiedergewonnen wurden. Durch die erfindungsgemäße wenigstens eine Zwischenlage wird auch die Schweißnahtfestigkeit gegenüber im Stand der Technik bekannten Beuteln verbessert.

Gleichzeitig ist die wenigstens eine Zwischenlage Teil des Laminats der Beutelwand, stellt also mit anderen Worten eine vollständige Lage der Beutelwand dar. Die wenigstens eine Zwischenlage ist dabei mit den anderen Lagen des Laminats verschweißt, insbesondere über wenigstens eine Ultraschallschweißnaht. Damit entfällt ein aufwändiges Positionieren wie etwa für die Materialstreifen der DE 20 300 781 U1. Auch aus fertigungstechnischer Sicht bietet der erfindungsgemäße Staubsaugerfilterbeutel also Vorteile.

Im Sinne der vorliegenden Erfindung bezeichnet ein Vliesstoff dabei ein Wirrgelege, das einen Verfestigungsschritt durchlaufen hat, so dass es eine ausreichende Festigkeit aufweist, um zum Beispiel maschinell (also in industriellem Maßstab) zu Rollen auf- bzw. abgewickelt zu werden. Die für ein Aufwickeln minimal erforderliche Bahnspannung beträgt 0,044 N/mm. Die Bahnspannung sollte nicht höher als 10% bis 25% der Mindesthöchstzugkraft (gemäß DIN EN 29073-3:1992-08) des aufzuwickelnden Materials betragen. Daraus resultiert eine Mindesthöchstzugkraft für ein aufzuwickelndes Material von 8,8 N pro 5 cm Streifenbreite.

Ein Faservlies oder kurz nur "Vlies" genannt entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel maschinell zu Rollen auf- bzw. abgewickelt zu werden.

Der Begriff Vliesstoff ("Nonwoven") wird in anderen Worten gemäß der Definition nach ISO Standard ISO9092:1988 bzw. CEM Standard EN29092 verwendet. Details zur Verwendung der hierin beschriebenen Definitionen und/oder Verfahren lassen sich auch dem Standardwerk "Vliesstoffe", W. Albrecht, H. Fuchs, W. Kittelmann, Wiley-VCH, 2000, entnehmen.

Für die wenigstens eine Zwischenlage kann sowohl ein Vliesstoff als auch ein Faservlies Verwendung finden.

Die wenigstens eine Zwischenlage kann insbesondere aus einem Stapelfaservliesstoff oder einem Extrusionsvliesstoff hergestellt sein. Im Falle von einem Stapelfaservliesstoff umfasst die Zwischenlage entsprechend Fasern, im Falle von einem Extrusionsvliesstoff sogenannte Filamente. Entsprechend sind auch Stapelfaservliese oder Extrusionsvliese möglich.

Im Falle eines Extrusionsvliesstoffs ist insbesondere ein Filamentspinnvliesstoff (Spunbond) möglich, insbesondere ein grober, sehr offener Filamentspinnvliesstoff.

Die Fasern oder Filamente der wenigstens einen Zwischenlage können einen größeren mittleren Durchmesser aufweisen als die Fasern oder Filamente der anderen Lagen der Beutelwand, insbesondere der Feinfilterlage. Die Faser oder Filamente der wenigstens einen Zwischenlage weisen einen mittleren Durchmesser von mehr als 5 µm, insbesondere von 10 µm bis 100 µm, insbesondere von 30 µm bis 100 µm, auf.

Der mittlere Filamentdurchmesser der Feinfilterlage kann dagegen kleiner als 5 µm sein.

Der mittlere Durchmesser der Fasern oder Filamente kann dabei mikroskopisch, insbesondere durch Licht- oder Rasterelektronenmikroskopie, gemessen werden. Insbesondere kann der mittlere Durchmesser der Fasern oder Filamente einer Lage, insbesondere der wenigstens einen Zwischenlage, wie folgt bestimmt werden: Man entnimmt wenigstens zehn Proben der zu untersuchenden Lage, wobei jede Probe einem runden Ausschnitt der zu untersuchenden Lage entspricht, beispielsweise in der Größe des Probenhalters des Mikroskops. Beispielsweise kann jeder Ausschnitt eine Scheibe mit einem Durchmesser von 12,5 mm sein. Die Dicke der jeweiligen Probe entspricht der Dicke der zu untersuchenden Lage. Die jeweilige Probe wird dann in Draufsicht auf die kreisförmige Fläche untersucht. Für jede Probe werden insbesondere mittels eines Rasterelektronenmikroskops bei einer Vergrößerung von 250fach eine oder mehrere Aufnahmen gemacht. Bei mehreren Aufnahmen sollen diese von nicht überlappenden Teilbereichen der Probe stammen. Für jede Probe werden in der einen oder den mehreren Aufnahmen für alle Fasern/Filamente der Durchmesser bestimmt. Die Anzahl der wenigstens zehn Proben und/oder die Anzahl der Aufnahmen je Probe werden so gewählt, dass wenigstens 500 Durchmesser-Messwerte erhalten werden. Aus diesen wenigstens 500 Messwerten wird dann ein ungewichtetes arithmetisches Mittel berechnet, welches dem mittleren Durchmesser der Fasern/Filamente der Lage entspricht.

Für die Feinfilterlage wird prinzipiell die gleiche Vorgehensweise angewendet. Allerdings muss hier wegen der Feinheit der Filamente mit einer Vergrößerung von 1000fach gearbeitet werden.

Die Messungen können beispielsweise mit einem "Phenom ProX scanning electron microscope (SEM)" der Firma "Thermo Fisher Scientific" durchgeführt werden. Die Vermessung der Fasern/Filamente kann mit dem dafür erhältlichen Programm "FiberMetric", ebenfalls der Firma "Thermo Fisher Scientific", durchgeführt werden.

Die Luftdurchlässigkeit der wenigstens einen Zwischenlage kann mehr als 2000 l/m²/s sein, insbesondere mehr als 4000 l/m²/s, insbesondere mehr als 8000 l/m²/s. Dadurch kann gewährleistet werden, dass sich die filtertechnischen Eigenschaften des Laminats nicht durch die Zwischenlage verschlechtern.

Das Flächengewicht der wenigstens einen Zwischenlage kann zwischen 5 und 50 g/m² betragen.

Bei der wenigstens einen Zwischenlage kann es sich also um einen relativ groben Vliesstoff bzw. ein relativ grobes Faservlies handeln. Durch die räumlich konzentriertere Materialverteilung kann eine tiefere Durchdringung der Feinfilterlage beim Schweißen erreicht werden. Außerdem wirken die groben Fasern als Richtungsgeber für den Ultraschall. Zusätzlich ist die Luftdurchlässigkeit eines solchen groben Materials höher als für ein gleichschweres feineres Material.

Der Schmelzflussindex (MFI) der Fasern oder Filamente der wenigstens einen Zwischenlage kann weniger als 100 g/10min, insbesondere weniger als 50 g/10min betragen. Das Material ist als Schmelze also zähflüssig und kann so eine stabilere Verbindung ermöglichen. Der MFI des Materials der Feinfilterlage liegt zwischen 400 und 1500 g/10min. Dies entspricht dem üblichen MFI für beispielsweise PP eines Meltblown. Die Schmelze eines solchen PPs ist von der Viskosität her ähnlich der von Wasser.

Der Schmelzflussindex, auch als Schmelze-Massefließrate bezeichnet, dient der Charakterisierung des Fließverhaltens eines Kunststoffs bei vorherbestimmten Druck- und Temperaturbedingungen. Mit anderen Worten ist der Schmelzflussindex ein Maß für das Fließverhalten einer Kunststoffschmelze.

Der Schmelzflussindex ist nach ISO 1133 definiert und wird mittels eines Kapillarrheometers gemessen. Der Schmelzflussindex gibt die Masse der Thermoplastschmelze an, die in 10 Minuten unter einer vorherbestimmte Druckbeaufschlagung durch eine vorherbestimmte Düse gedrückt wird.

Die wenigstens eine Zwischenlage kann insbesondere unmittelbar an die Feinfilterlage angrenzen. Mit anderen Worten können die Lagen der Beutelwand so angeordnet sein, dass sich zwischen der Feinfilterlage und der Zwischenlage bzw. zwischen der Feinfilterlage und der Kapazitätslage keine weitere Lage befindet. Auch kann die wenigstens eine Zwischenlage unmittelbar an die Stützlage bzw. Kapazitätslage anschließen, so dass auch zwischen der Zwischenlage und der Stützlage bzw. zwischen der Zwischenlage und der Kapazitätslage keine weitere Lage angeordnet ist. Dadurch kann eine besonders vorteilhafte Verbindung der Lagen miteinander und damit eine stabile Schweißnaht erreicht werden.

An die Kapazitätslage kann zum Beutelinneren hin eine Schutzlage anschließen, die aus einem Vliesstoff gefertigt ist, der einen recyclierten Kunststoff umfasst.

Die Schutzlage kann insbesondere entsprechend der wenigstens einen Zwischenlage ausgebildet sein. Mit anderen Worten kann die Schutzlage aus dem gleichen Vliesstoff gefertigt sein, wie die wenigstens eine Zwischenlage, also aus einem Vliesstoff mit rPP als Hauptkomponente. Die Schutzlage kann auch einer der Zwischenlage vergleichbare Funktion übernehmen, insbesondere, wenn beim Konfektionieren des Staubsaugerfilterbeutels die Schutzlage an eine weitere Vliesstofflage grenzt und mit dieser verschweißt wird.

Die Stützlage kann insbesondere ein Spinnvliesstoff (Spunbond) sein, der rPET als Hauptkomponente umfasst oder daraus besteht.

Der Vliesstoff der wenigstens einen Zwischenlage kann ein kardiertes Material umfassen. Als Bindeschritt kommen dabei sowohl mechanische Verfahren (z.B. Vernadeln) als auch thermische Verfahren (z.B. Kalandrieren) in Frage. Ebenfalls möglich ist die Verwendung von Bindefasern oder Klebemitteln, etwa einem Latexkleber. Grobe Extrusionsvliesstoffe, z.B. Spinnvliesstoffe, oder Airlaid Materialien sind auch möglich.

Der Vliesstoff der wenigstens einen Zwischenlage kann Bikomponentenfasern umfassen. Bikomponentenfasern (BiCo-Fasern) können aus einem Kern sowie einem den Kern umhüllenden Mantel gebildet sein. In diesem Fall kann insbesondere der Kern aus rPET und die Hülle aus rPP gebildet sein oder umgekehrt der Kern aus rPP und die Hülle aus rPET. Neben Kern/Mantel Bikomponentenfasern können auch die anderen gebräuchlichen Varianten von Bikomponentenfasern, z. B. side-by-side, verwendet werden.

Die Bikomponentenfasern können als Stapelfasern vorliegen oder als Filamente bei einem Extrusionsvliesstoff (beispielsweise Meltblownvliesstoff) ausgebildet sein.

Der Staubsaugerfilterbeutel kann außerdem eine Halteplatte umfassen. Die Halteplatte kann an eine Halteeinrichtung in einem Staubsaugergehäuse anbringbar sein. Dadurch kann die Halteplatte im Staubsaugergehäuse in einer vorbestimmten Position anordenbar, insbesondere fixierbar, sein. Die Halteplatte kann eine Durchgangsöffnung aufweisen, welche mit einer Durchgangsöffnung in der Beutelwand fluchtet, so dass eine Einströmöffnung gebildet wird, durch welche die zu reinigende Luft in das Innere des Staubsaugerfilterbeutels strömen kann.

Die Halteplatte kann ebenfalls einen recyclierten Kunststoff umfassen oder aus einem oder mehreren recyclierten Kunststoffen bestehen. Insbesondere kann die Halteplatte rPP und/oder rPET umfassen oder daraus bestehen.

Die Halteplatte kann insbesondere mit der Beutelwand verschweißt sein. Insbesondere kann zwischen der Halteplatte und der äußersten Lage der Beutelwand, insbesondere der Stützlage, ein Vliesstoffelement als Haftvermittler angeordnet sein. Das Vliesstoffelement, über welches die Halteplatte mit der Beutelwand verschweißt ist, kann insbesondere rPP und/oder rPET umfassen. Das Vliesstoffelement kann insbesondere aus dem gleichen Material wie die Zwischenlage hergestellt sein.

Es ist auch möglich, dass zwischen der Halteplatte und der Beutelwand eine thermoplastische Folie als Dichtung angeordnet ist. Je nach Material der Außenlage der Beutelwand und der Halteplatte kann das thermoplastische Elastomer (TPE) des Dichtelements ein TPE auf Basis von PP oder auf Basis von PET sein. Das Material sollte aufeinander abgestimmt sein, d.h. bei einer Halteplatte und einer Außenlage mit PET als Hauptkomponente sollte auch das Dichtmaterial als Hauptkomponente PET umfassen, bzw. PP, wenn Halteplatte und Außenlage PP als Hauptkomponente umfassen.

Weiterhin ist es möglich, dass im Innenraum mindestens ein Strömungsverteiler und/oder mindestens ein Diffusor angeordnet sind, wobei bevorzugt der mindestens eine Strömungsverteiler und/oder der mindestens eine Diffusor aus einem recyclierten Kunststoff oder mehreren recyclierten Kunststoffen gebildet ist. Derartige Strömungsverteiler bzw. Diffusoren sind z.B. aus den Patentanmeldungen EP 2 263 508, EP 2 442 703, DE 20 2006 020 047, DE 20 2008 003 248, DE 20 2008 005 050 bekannt. Auch die erfindungsgemäßen Staubsaugerfilterbeutel, inklusive Strömungsverteiler können entsprechend ausgestaltet sein.

Strömungsverteiler und Diffusoren werden vorzugsweise ebenfalls aus Vliesstoffen oder Laminaten von Vliesstoffen gefertigt. Für diese Elemente kommen bevorzugt die gleichen Materialien in Frage, wie für die Kapazitäts- und Verstärkungslagen (letztere auch als Stütz- oder Schutzlagen bezeichnet).

Eine weitere bevorzugte Ausführungsform sieht vor, dass der Gewichtsanteil aller recycelten Materialien, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt. Somit können die Anforderungen des Global Recycled Standard (GRS), v3 (August 2014) von Textile Exchange erreicht werden.

Der Staubsaugerfilterbeutel gemäß der vorliegenden Erfindung kann beispielsweise in Form eines Flachbeutels, eines Seitenfaltenbeutels, eines Blockbodenbeutels oder eines 3D-Beutels, wie beispielsweise eines Staubsaugerfilterbeutels für einen Upright-Staubsauger ausgebildet sein. Ein Flachbeutel weist dabei keine Seitenwände auf und ist aus zwei Materiallagen gebildet, wobei die beiden Materiallagen entlang ihres Umfangs unmittelbar miteinander verbunden, beispielsweise verschweißt oder verklebt sind. Jede der Materiallagen kann dabei ein Laminat sein, also selbst mehrere Vliesstofflagen oder Vlies- und Vliesstofflagen umfassen. Seitenfaltenbeutel stellen eine modifizierte Form eines Flachbeutels dar und umfassen festgelegte oder ausstülpbare Seitenfalten. Blockbodenbeutel umfassen einen sogenannten Block- oder Klotzboden, der zumeist die Schmalseite des Staubsaugerfilterbeutels bildet; an dieser Seite ist in der Regel eine Halteplatte angeordnet.

Für viele Kunststoff-Recyclate bestehen einschlägige internationale Normen. Für PET-Kunststoff-Recyclate ist beispielsweise die DIN EN 15353:2007 einschlägig. PP-Recyclate werden in DIN EN 15345:2008 charakterisiert. Zum Zwecke der entsprechenden speziellen Kunststoff-recyclate macht sich die vorliegende Patentanmeldung die Definitionen dieser internationalen Normen zu Eigen. Die Kunststoff-Recyclate können dabei unmetallisiert sein. Ein Beispiel hierfür sind aus PET-Getränkeflaschen zurückgewonnene Kunststoffflakes oder -chips. Ebenso können die Kunststoff-Recyclate metallisiert sein, z.B. wenn die Recyclate aus metallischen Kunststofffolien erhalten wurden, insbesondere metallisierten PET-Folien (MPET).

Recycliertes Polyethylenterephthalat (rPET) kann beispielsweise aus Getränkeflaschen, insbesondere aus sog. Bottleflakes, also Stücke gemahlener Getränkeflaschen, erhalten werden.

Die recyclierten Kunststoffe, insbesondere das recyclierte PET und/oder das recyclierte PP, sowohl in der metallisierten, als auch in der nicht metallisierten Fassung, können zu den entsprechenden Fasern versponnen werden, aus denen die entsprechenden Stapelfasern bzw. Meltblown- oder Spunbond-Vliesstoffe für die Zwecke der vorliegenden Erfindung hergestellt werden können.

Sofern hierin recyclierte Kunststoffe angesprochen werden, wird den Abkürzungen ein "r" vorangesetzt, beispielsweise rPP oder rPET. Sofern hierin Abkürzungen ohne vorangestelltes "r" verwendet werden, bezeichnet dies die Kunststoffneumaterialien (virgin Kunststoffe).

Das recyclierte Material aus der Herstellung von Textilien (TLO), welches insbesondere für die Kapazitätslage Anwendung finden kann, fällt insbesondere bei der Prozessierung von Textilmaterialien (insbesondere Textilfasern und -filamenten, sowie damit hergestellte linienförmige, flächenförmige und räumliche textile Gebilde), wie beispielsweise der Herstellung (umfassend Kardieren, Spinnen, Schneiden und Trocknen) oder dem Recyceln von Textilmaterialien an. Diese pulver- und/oder faserförmigen Materialien stellen Abfallmaterialien dar, die sich auf den zur Verarbeitung der Textilien verwendeten Maschinen oder Filtermaterialien absetzen können. Die Stäube (Pulver) bzw. Fasern werden normalerweise entsorgt und thermisch verwertet.

Bei dem pulver- und/oder faserförmigen recyclierten Material handelt es sich also beispielsweise um Produktionsabfall; dies gilt insbesondere für Material, das beim Kardieren, Spinnen, Schneiden oder Trocknen von Textilmaterialien als Abfallprodukt anfällt. Man spricht in diesem Fall auch von "pre-consumer waste".

Bei dem Recycling von Textilmaterialien, also der Verarbeitung (bspw. dem Zerkleinern) von gebrauchten Textilmaterialien oder Textilien (bspw. Altkleidern) entsteht ebenfalls pulver- und/oder faserförmiges recycliertes Material; hier spricht man von "post-consumer waste".

Das recyclierte Material aus der Herstellung von Textilien, TLO, kann also insbesondere Fasern und oder Filamente, die aus Abfallmaterialien aus der Textil- und Bekleidungsindustrie, aus Post-Consumer-Abfall (Textilien und ähnliches) und/oder aus Produkten, die für das Recycling gesammelt wurden, gewonnen wurden, umfassen.

Die Erfindung stellt außerdem ein Verfahren zur Herstellung eines Staubsaugerfilterbeutels gemäß Anspruch 11 bereit.

Dadurch, dass das Laminat wenigstens eine Zwischenlage aus Vliesstoff oder Faservlies mit rPP als Hauptkomponente aufweist, kann, wie oben dargelegt, eine Verbesserung der Schweißnahtfestigkeit erreicht werden.

Die Lagen des Laminats können eines oder mehrere der oben genannten Merkmale aufweisen.

Das Konfektionieren des Vliesstofflaminats kann außerdem ein Ausbilden wenigstens einer Schweißnaht umfassen und das Verfahren kann außerdem ein Vorverdichten des Vliesstofflaminats in wenigstens einem Bereich, in dem die wenigstens eine Schweißnaht gebildet wird, umfassen. Es wurde festgestellt, dass durch eine solche Schweißung in zwei Schritten, also Vorverdichtung vor dem eigentlichen Schweißen, eine weitere Verbesserung der Schweißnahtfestigkeit erreicht werden kann.

Das Vorverdichten kann durch Ultraschallschweißen, thermisches Schweißen oder durch Druckbeaufschlagung erfolgen.

Das Verfahren kann außerdem ein Stanzen einer Durchtrittsöffnung im Vliesstofflaminat umfassen, sowie ein Anordnen eines Vliesstoffelements und einer Halteplatte im Bereich der Durchtrittsöffnung sowie ein Verschweißen der Halteplatte mit der Materialbahn über das Vliesstoffelement.

Die Vorverdichtung kann auch im Bereich der Beutelwand, der mit der Halteplatte verbunden wird, eingesetzt werden. Dazu wird zunächst ein ringförmiger Bereich der Beutelwand vorverdichtet. In nachfolgenden Schritten wird die Durchtrittsöffnung gestanzt und die Halteplatte im Bereich des vorverdichteten, ringförmigen Bereichs aufgeschweißt.

Das Vliesstofflaminat kann in Form einer ersten und zweiten Materialbahn bereitgestellt werden. Das Konfektionieren des Staubsaugerfilterbeutels kann dann außerdem ein Überlappen der Materialbahnen und ein Ausbilden zweier gegenüberliegender in Maschinenrichtung verlaufender Längsschweißnähte und zweier gegenüberliegender quer zur Maschinenrichtung verlaufender Querschweißnähte durch Ultraschallschweißen sowie ein Abtrennen des so gebildeten Beutels im Bereich der Querschweißnähte umfassen. Auf diesem Wege kann ein Flachbeutel hergestellt werden.

Das Verfahren kann außerdem ein Ausbilden von Seitenfalten umfassen, sodass ein Seitenfaltenbeutel gebildet wird.

Die Erfindung stellt außerdem einen Staubsaugerfilterbeutel nach Anspruch 15 bereit. Dieser verwirklicht ebenfalls die erfinderische Idee der wenigstens einen Zwischenlage, ist jedoch vom Aufbau her einfacher als der Staubsaugerfilterbeutel des Anspruchs 1, da auf eine Kapazitätslage verzichtet werden kann.

Die wenigstens eine Zwischenlage, die Stützlage, die Feinfilterlage und die Schutzlage können jeweils eines oder mehrere der oben beschriebenen Merkmale aufweisen. Auch der Staubsaugerfilterbeutel sonst kann, abgesehen von der Kapazitätslage, eines oder mehrere der oben beschriebenen Merkmale aufweisen.

Insbesondere können die Stützlage und die Schutzlage als Spunbond-Vliesstoffe ausgebildet sein. In diesem Fall ergibt sich der an sich bekannte Grundaufbau Spunbond-Meltblown-Spunbond (SMS), der erfindungsgemäß jedoch um die wenigstens eine Zwischenlage ergänzt wird.

Die Beutelwand des Staubsaugerfilterbeutels nach Anspruch 15 kann auch mehrere Feinfilterlagen, insbesondere in Form von Meltblown-Vliesstoffen umfassen.

Die Erfindung stellt außerdem ein Verfahren zur Herstellung eines Staubsaugerfilterbeutels gemäß Anspruch 16 bereit. Hierbei kann es sich insbesondere um ein Verfahren zum Herstellen eines Staubsaugerfilterbeutels gemäß Anspruch 15 handeln. Das Verfahren kann, abgesehen von der fehlenden Kapazitätslage, eines oder mehrere der oben beschriebenen Merkmale des Verfahrens nach Anspruch 11 aufweisen.

Weitere Merkmale und Vorteile der Erfindung werden nachfolgend anhand der beispielhaften Figuren beschrieben. Dabei zeigt:
- Figur 1: schematisch den Aufbau eines beispielhaften Staubsaugerfilterbeutels; und
- Figur 2: den schematischen Aufbau der Beutelwand eines beispielhaften Staubsaugerfilterbeutels im Querschnitt.

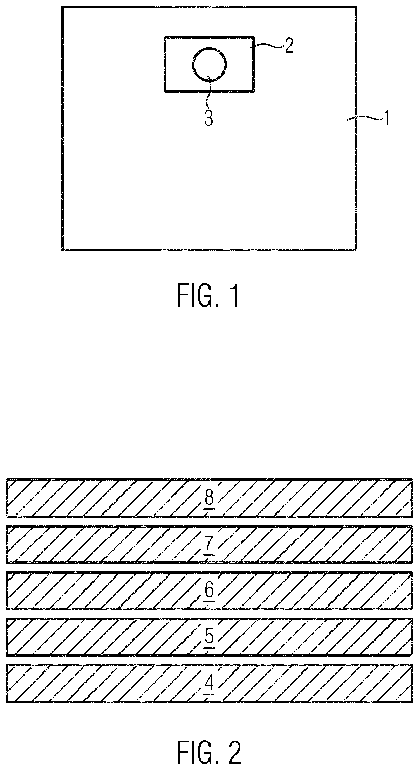

Figur 1 zeigt den schematischen Aufbau eines beispielhaften Staubsaugerfilterbeutels. Der Filterbeutel umfasst eine Beutelwand 1, eine Halteplatte 2 sowie eine Einströmöffnung, durch welche die zu filternde Luft in den Filterbeutel strömt. Die Einströmöffnung wird hier durch eine Durchtrittsöffnung 3 in der Grundplatte der Halteplatte 2 und eine fluchtend dazu angeordnete Durchgangsöffnung in der Beutelwand 1 gebildet. Die Halteplatte 2 dient der Fixierung des Staubsaugerfilterbeutels in einer korrespondierenden Halterung in einem Gehäuse eines Staubsaugers.

Die Beutelwand 1 umfasst mehrere Vliesstofflagen oder mehrere Vliesstoff- und Faservlieslagen, die einander vom Beutelinneren zur Beutelaußenseite hin überlappen. Die Vliesstoff- oder Faservlieslagen können lose aufeinander liegen oder miteinander verbunden sein. Die Verbindungen können flächig (z.B. über Sprühkleber) oder punktuell (z.B. über ein Kalandriermuster) erfolgen.

Die einzelnen Lagen können insbesondere unterschiedliche Kunststoffmaterialien umfassen, und zwar untereinander und/oder innerhalb einer jeweiligen Lage.

Der beispielhafte Staubsaugerfilterbeutel der Figur 1 ist ein sogenannter Flachbeutel, bei dem die Beutelwand eine Oberseite und eine Unterseite umfasst, welche durch eine umlaufende Schweißnaht miteinander verbunden sind. Sowohl die Oberseite als auch die Unterseite des Flachbeutels umfasst, wie oben erwähnt, mehrere Filtermateriallagen, insbesondere mehrere Vliesstofflagen oder mehrere Vliesstoff- und Faservlieslagen. Sowohl die Oberseite als auch die Unterseite können insbesondere aus einem Laminat mehrerer Vliesstofflagen gebildet sein. Die Erfindung ist jedoch nicht auf Flachbeutel beschränkt, sondern kann beispielsweise auch für Seitenfaltenbeutel oder Klotzbodenbeutel angewendet werden.

Vorteilhafterweise umfasst die Halteplatte 2 in diesem Beispiel eine Grundplatte aus einem recyclierten Kunststoffmaterial, beispielsweise recycliertem Polypropylen (rPP) oder recycliertem Polyethylenterephthalat (rPET).

Im Betrieb eines solchen Staubsaugerfilterbeutels ist die Schweißnahtfestigkeit für die umlaufende Schweißnaht von besonderer Relevanz.

Figur 2 illustriert einen beispielhaften Aufbau der Beutelwand, welcher zu einer Erhöhung der Schweißnahtfestigkeit gegenüber bekannten Staubsaugerfilterbeuteln führt.

Insbesondere zeigt Figur 2 einen Schnitt durch die Beutelwand eines beispielhaften Staubsaugerfilterbeutels, beispielsweise durch die Oberseite des Flachbeutels der Figur 1. Dabei ist die Lage 4 zum Beutelinneren hin angeordnet und die Lage 8 an der Außenseite des Staubsaugerfilterbeutels.

Bei der Lage 4 handelt es sich um eine Schutzlage, welche aus einem Vliesstoff aus beliebigen recyclierten Fasern oder Filamenten gebildet werden kann. Beispielsweise kann die Schutzlage aus einem Vliesstoff gebildet sein, der rPP und/oder rPET umfasst oder daraus besteht. Insbesondere kann die Schutzlage 4 ein Spunbond sein.

Als Rohstoff können beispielsweise PET-Abfälle (z. B. Stanzabfälle) und sogenannte Bottleflakes, also Stücke gemahlener Getränkeflaschen verwendet werden. Um die unterschiedliche Färbung der Abfälle zu überdecken, ist es möglich, das Recyclat einzufärben. Als thermisches Bindeverfahren für die Verfestigung des Spinnvlieses zu einem Spunbond ist insbesondere das HELIX® (Comerio Ercole) Verfahren vorteilhaft.

An die Schutzlage anschließend ist eine Kapazitätslage 5 angeordnet. Die Kapazitätslage 5 bietet einen hohen Widerstand gegenüber Stoßbelastung, und ermöglicht ein Filtern von großen Schmutzpartikeln, ein Filtern eines signifikanten Anteils von kleinen Staubpartikeln und ein Speichern bzw. Zurückhalten von großen Mengen an Partikeln, wobei der Luft ein einfaches Durchströmen erlaubt wird, und somit ein geringer Druckabfall bei hoher Partikelbeladung resultiert. Die Kapazitätslage kann insbesondere ein Faservlies und/oder oder einen Vliesstoff umfassen, das bzw. der pulver- und/oder faserförmiges recycliertes Material aus der Herstellung von Textilien (TLO) umfasst, oder daraus bestehen. Die Kapazitätslage 5 kann auch rPET und/oder rPP umfassen oder daraus bestehen.

Die Kapazitätslage 5 weist vorzugsweise eine Grammatur von 5 bis 200 g/m², insbesondere von 10 bis 150 g/m², insbesondere von 20 bis 100 g/m², insbesondere 30 bis 50 g/m² auf.

Zur Außenseite der Beutelwand hin schließt an die Kapazitätslage 5 eine Feinfilterlage 6 an. Die Feinfilterlage 6 ist in diesem Beispiel ein Extrusionsvliesstoff, insbesondere ein Meltblownvliesstoff. Die Feinfilterlage 6 kann insbesondere (virgin) Polypropylen, Bikomponentenfasern aus (virgin) Polypropylen und (virgin) Polyethylenterephthalat und/oder Bikomponentenfasern aus (virgin) Polypropylen und recycliertem-Polypropylen umfassen, oder daraus bestehen.

Eine Feinfilterlage 6 dient der Erhöhung der Filtrationsleistung des mehrlagigen Filtermaterials durch Einfangen von Partikeln, die beispielsweise durch die Schutzlage 4 und/oder die Kapazitätslage 5 hindurch gelangen. Zur weiteren Erhöhung der Abscheideleistung kann die Feinfilterlage 6 bevorzugt elektrostatisch (z.B. durch Coronaentladung oder Hydrocharging) aufgeladen werden, um insbesondere die Abscheidung von Feinstaubpartikeln zu erhöhen.

Gemäß einer vorteilhaften Ausgestaltungsform weist die Feinfilterlage 6 eine Grammatur von 5 bis 100 g/m², insbesondere 10 bis 50 g/m², insbesondere 10 bis 30 g/m², auf.

Das Flächengewicht (Grammatur) wird gemäß DIN EN 29073-1: 1992-08 bestimmt.

Die in diesem schematischen Beispiel am Äußersten angeordnete Lage ist die Stützlage 8. Eine Stützlage (manchmal auch "Verstärkungslage" genannt) ist dabei eine Lage, die dem mehrlagigen Verbund des Filtermaterials die notwendige mechanische Festigkeit verleiht. Bei der Stützlage kann es sich insbesondere um einen offenen, porösen Vliesstoff mit leichtem Flächengewicht handeln. Bei der Stützlage 8 kann sich insbesondere um einen Spinnvliesstoff handeln, der rPET umfasst oder daraus besteht.

Einen Überblick über die einzelnen Funktionslagen innerhalb mehrlagiger Filtermaterialien für Staubsaugerfilterbeutel bietet die WO 01/003802.

Gemäß einem Ausführungsbeispiel der Erfindung ist zwischen der Stützlage 8 und der Feinfilterlage 6 eine Zwischenlage 7 angeordnet, welche aus einem Vliesstoff gefertigt ist, der rPP als Hauptkomponente umfasst. Die Zwischenlage 7 kann eine Vliesstofflage aus einem Stapelfaservliesstoff oder einem Extrusionsvliesstoff sein. Es hat sich überraschend herausgestellt, dass eine solche Zwischenlage die Schweißnahtfestigkeit des Filterbeutels wesentlich verbessert. Anstelle eines Vliesstoffes kann für die Zwischenlage 7 auch ein Faservlies verwendet werden. Eine Eigenfestigkeit der Zwischenlage ist nämlich nicht erforderlich.

Eine besonders vorteilhafte Verbesserung der Höchstzugkraft der Schweißnähte (hierin kurz auch als "Schweißnahtfestigkeit" bezeichnet) lässt sich erzielen, wenn das Flächengewicht der Zwischenlage 7 zwischen 5 und 50 g/m² liegt. Der mittlere Durchmesser der Fasern bzw. Filamente beträgt wenigstens 5 µm, insbesondere zwischen 10 µm und 100 µm.

Ein solcher Vliesstoff ist verhältnismäßig grob. Die Luftdurchlässigkeit kann dabei wenigstens 4000 l/m²/s sein.

Die Luftdurchlässigkeit wird gemäß DIN EN ISO 9237: 1995-12 bestimmt. Eingesetzt werden kann das Luftdurchlässigkeits-Prüfgerät FX3300 der Texttest AG. Es kann insbesondere mit einem Differenzdruck von 200 Pa und einer Prüffläche von 25 cm² gearbeitet werden.

Die Bestimmung der Höchstzugkraft kann gemäß DIN EN 29073-3: 1992-08 durchgeführt werden, insbesondere mit einem Streifen von 5 cm Breite.

Der Schmelzflussindex des Materials der Zwischenlage, insbesondere des verwendeten rPP kann weniger als 100 g/10 min betragen. Dadurch kann die Höchstzugkraft der Schweißnähte weiter erhöht werden.

Eine weitere Verbesserung der Schweißnahtfestigkeit kann erreicht werden, wenn die Schweißung in zwei Schritten erfolgt. In einem ersten Schritt kann insbesondere eine oder beide Materialbahnen, die für die Herstellung des Flachbeutels verwendet werden, im Schweißbereich vorverdichtet werden. Diese Vorverdichtung kann durch Ultraschallschweißen, thermisches Schweißen oder durch Druckbeaufschlagung erfolgen. Insbesondere kann die Sonotrode beim Vorverdichten auf der Außenseite des Laminats aufgesetzt werden, also unmittelbar mit der Stützlage 8 in Kontakt stehen.

Die zum Schweißen verwendeten Sonotroden und Ambosse können eine glatte Oberfläche aufweisen. Vorteilhaft ist es aber, wenn die Sonotrode und/oder der Amboss für den Schweißvorgang eine Hoch-Tief-Struktur aufweist, die Oberfläche also relieffiert ist. Zum Vorverdichten ist eine beidseitig glatte Oberfläche oder eine geringere Strukturierung vorteilhaft.

Eine weitere, in den Figuren nicht gezeigte zweite Zwischenlage kann zwischen der Feinfilterlage 6 und der Kapazitätslage 5 vorgesehen sein. Die zweite Zwischenlage kann entsprechend der ersten Zwischenlage 7 ausgebildet sein, kann sich aber auch in einem oder mehreren Merkmalen von der Zwischenlage 7 unterscheiden. Wesentlich ist lediglich, dass auch die zweite Zwischenlage aus einem Vliesstoff oder einem Faservlies gefertigt ist, der oder das rPP als Hauptkomponente umfasst. Bevorzugt ist auch das Flächengewicht der zweiten Zwischenlage zwischen 5 und 50 g/m² und gleichzeitig der mittlere Durchmesser der Fasern bzw. Filamente wenigstens 5 µm, insbesondere zwischen 10 µm und 100 µm, beträgt. Der Schmelzflussindex des Materials der zweiten Zwischenlage, insbesondere des verwendeten rPP kann ebenfalls weniger als 100 g/10 min betragen.

Die Kapazitätslage 5 kann gemäß einer Alternative auch entfallen oder durch eine weitere Zwischenlage oder eine weitere Feinfilterlage ersetzt werden.

Zur Verdeutlichung des Effekts von Zwischenlagen aus rPP wurden folgende Vergleichsmessungen angestellt:

| **Variante** | **Vergleichsbeispiel 1** | **Vergleichsbeispiel 2** | **Ausführung gemäß der Erfindung** |
|---|---|---|---|
| Materialaufbau | **Stützlage:** rPET Spinnvliesstoff 40 g/m² | **Stützlage:** rPET Spinnvliesstoff 40 g/m² | **Stützlage:** rPET Spinnvliesstoff 40 g/m² |
| | **Feinfilterlage:** PP Meltblown 20 g/m² | **Feinfilterlage:** PP Meltblown 40 g/m² | **Zwischenlage:** rPP kardiert 20 g/m² |
| | **Kapazitätslage:** kardierter Vliesstoff mit TLO 90 g/m² | **Kapazitätslage:** kardierter Vliesstoff mit TLO 90 g/m² | **Feinfilterlage:** PP Meltblown 40 g/m² |
| | | | **Zwischenlage:** rPP kardiert 20 g/m² |
| | | | **Kapazitätslage:** kardierter Vliesstoff mit TLO 90 g/m² |
| Schweißparameter | 2400 W, 4 bar, 260 J, 70% Amplitude | 2400 W, 4 bar, 260 J, 70% Amplitude | 2400 W, 4 bar, 260 J, 70% Amplitude |
| Höchstzugkraft | Mittelwert aus 10 Messungen: | Mittelwert aus 10 Messungen: | Mittelwert aus 10 Messungen: |
| | 32,9 N | 44,4 N | 75,4 N |
| Schweißnaht bei 5 cm Streifenbreite | | | |

Der Einfluss einer optionalen Vorverdichtung wird anhand der Folgenden Messungen ersichtlich:

| | | |
|---|---|---|
| Materialaufbau | **Stützlage:** rPET Spinnvliesstoff 50 g/m² | **Stützlage:** rPET Spinnvliesstoff 50 g/m² |
| | **Zwischenlage:** rPP kardiert 20 g/m² | **Zwischenlage:** rPP kardiert 20 g/m² |
| | **Feinfilterlage:** PP Meltblown 20 g/m² | **Feinfilterlage:** PP Meltblown 20 g/m² |
| | **Zwischenlage:** rPP kardiert 20 g/m² | **Zwischenlage:** rPP kardiert 20 g/m² |
| | **Kapazitätslage:** kardierter Vliesstoff mit TLO 90 g/m² | **Kapazitätslage:** kardierter Vliesstoff mit TLO 90 g/m² |
| Schweißparameter | 2400 W, 4 bar, 260 J, 70% Amplitude | 1. Vorverdichtung mit 2400 W, 4 bar und 200 J, 70% Amplitude |
| | | 2. Schweißung mit 2400 W, 4 bar, 260 J, 70% Amplitude |
| Höchstzugkraft Schweißnaht bei 5 cm Streifenbreite | Mittelwert aus 10 Messungen: | Mittelwert aus 10 Messungen: |
| | 75,4 N | 85,4 N |

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

## Patentansprüche

1. Staubsaugerfilterbeutel mit einer Beutelwand (1) umfassend:
eine Stützlage (8) umfassend recycliertes Polyethylenterephthalat, rPET;
eine Feinfilterlage (6) aus einem Meltblown-Vliesstoff umfassend Polypropylen, PP, PET und/oder recycliertes Polypropylen, rPP; und
eine Kapazitätslage (5) aus einem Vliesstoff umfassend rPET, recycliertes textiles Material, TLO, und/oder rPP;
wobei die Beutelwand (1) außerdem wenigstens eine Zwischenlage (7) umfasst, die aus einem Vliesstoff oder einem Faservlies gebildet wird, und rPP als Hauptkomponente umfasst;
wobei die wenigstens eine Zwischenlage (7) zwischen der Stützlage (8) und der Feinfilterlage
(6) und/oder zwischen der Feinfilterlage (6) und der Kapazitätslage (5) angeordnet ist; und wobei die Fasern oder Filamente des Vliesstoffes oder Faservlieses der wenigstens einen Zwischenlage (7) einen mittleren Durchmesser von mehr als 5 µm, insbesondere zwischen 10 µm und 100 µm, aufweisen.

2. Staubsaugerfilterbeutel nach Anspruch 1, wobei die wenigstens eine Zwischenlage (7) aus einem Stapelfaservliesstoff oder Stapelfaservlies oder einem Extrusionsvliesstoff oder Extrusionsvlies hergestellt ist.

3. Staubsaugerfilterbeutel nach einem der vorangegangenen Ansprüche, wobei die Luftdurchlässigkeit der wenigstens einen Zwischenlage (7) mehr als 2000 l/m²/s, insbesondere mehr als 4000 l/m²/s, insbesondere mehr als 8000 l/m²/s beträgt.

4. Staubsaugerfilterbeutel nach einem der vorangegangenen Ansprüche, wobei das Flächengewicht der wenigstens einen Zwischenlage (7) zwischen 5 und 50 g/m² beträgt.

5. Staubsaugerfilterbeutel nach einem der vorangegangenen Ansprüche, wobei das Material der wenigstens einen Zwischenlage (7) einen Schmelzflussindex von weniger als 100 g/10min, insbesondere weniger als 50 g/10min, aufweist.

6. Staubsaugerfilterbeutel nach einem der vorangegangenen Ansprüche, wobei die wenigstens eine Zwischenlage (7) unmittelbar an die Feinfilterlage (6) angrenzt.

7. Staubsaugerfilterbeutel nach einem der vorangegangenen Ansprüche, wobei an die Kapazitätslage (5) zum Beutelinneren hin eine Schutzlage (4) anschließt, die aus einem Vliesstoff gefertigt ist, der einen recyclierten Kunststoff umfasst.

8. Staubsaugerfilterbeutel nach Anspruch 7, wobei die Schutzlage (4) entsprechend der Zwischenlage (7) ausgebildet ist.

9. Staubsaugerfilterbeutel nach einem der vorangegangenen Ansprüche, wobei die Stützlage ein Spinnvliesstoff aus rPET ist.

10. Staubsaugerfilterbeutel nach einem der vorangegangenen Ansprüche, wobei der Vliesstoff der wenigstens einen Zwischenlage (7) Bicomponentenfasern umfasst, insbesondere solche, bei denen der Kern aus rPET und die Hülle aus rPP oder umgekehrt gebildet wird.

11. Verfahren zur Herstellung eines Staubsaugerfilterbeutels, umfassend die Schritte:
Bereitstellen eines Vliesstofflaminats umfassend:
eine Stützlage (8) umfassend recycliertes Polyethylenterephthalat, rPET;
eine Feinfilterlage (6) aus einem Meltblown-Vliesstoff umfassend Polypropylen, PP, PET und/oder recycliertes Polypropylen, rPP;
eine Kapazitätslage (5) aus einem Vliesstoff umfassend rPET, recycliertes textiles Material, TLO, und/oder rPP;
wenigstens eine Zwischenlage (7), die aus einem Vliesstoff oder einem Faservlies gebildet wird, und rPP als Hauptkomponente umfasst, wobei die wenigstens eine Zwischenlage (7) zwischen der Stützlage (8) und der Feinfilterlage (6) und/oder zwischen der Feinfilterlage (6) und der Kapazitätslage (5) angeordnet ist, und wobei die Fasern oder Filamente des Vliesstoffes oder Faservlieses der wenigstens einen Zwischenlage (7) einen mittleren Durchmesser von mehr als 5 µm, insbesondere zwischen 10 µm und 100 µm, aufweisen; und
Konfektionieren des Vliesstofflaminats zu einem Staubsaugerfilterbeutel.

12. Verfahren nach Anspruch 11, wobei das Konfektionieren des Vliesstofflaminats ein Ausbilden wenigstens einer Schweißnaht umfasst und das Verfahren außerdem ein Vorverdichten des Vliesstofflaminats in wenigstens einem Bereich, in dem die wenigstens eine Schweißnaht gebildet wird, umfasst.

13. Verfahren nach Anspruch 12, wobei das Vorverdichten durch Ultraschallschweißen, thermisches Schweißen oder durch Druckbeaufschlagung erfolgt.

14. Verfahren nach einem der Ansprüche 12 bis 13, wobei die Sonotrode beim Vorverdichten an der Stützlage (8) oder der der Stützlage (8) näher gelegenen Seite des Laminats angeordnet wird.

15. Staubsaugerfilterbeutel mit einer Beutelwand (1) umfassend:
eine Stützlage (8) umfassend recycliertes Polyethylenterephthalat, rPET;
eine Feinfilterlage (6) aus einem Meltblown-Vliesstoff umfassend Polypropylen, PP, PET und/oder recycliertes Polypropylen, rPP; und
eine Schutzlage (4), die aus einem Vliesstoff gefertigt ist, der einen recyclierten Kunststoff umfasst;
wobei die Beutelwand (1) außerdem wenigstens eine Zwischenlage (7) umfasst, die aus einem Vliesstoff oder einem Faservlies gebildet wird, und rPP als Hauptkomponente umfasst;
wobei die wenigstens eine Zwischenlage (7) zwischen der Stützlage (8) und der Feinfilterlage (6) und/oder zwischen der Feinfilterlage (6) und der Schutzlage (4) angeordnet ist; und
wobei die Fasern oder Filamente des Vliesstoffes oder Faservlieses der wenigstens einen Zwischenlage (7) einen mittleren Durchmesser von mehr als 5 µm, insbesondere zwischen 10 µm und 100 µm, aufweisen.

16. Verfahren zur Herstellung eines Staubsaugerfilterbeutels, umfassend die Schritte:
Bereitstellen eines Vliesstofflaminats umfassend:
eine Stützlage (8) umfassend recycliertes Polyethylenterephthalat, rPET;
eine Feinfilterlage (6) aus einem Meltblown-Vliesstoff umfassend Polypropylen, PP, PET und/oder recycliertes Polypropylen, rPP;
eine Schutzlage (4), die aus einem Vliesstoff gefertigt ist, der einen recyclierten Kunststoff umfasst; und
wenigstens eine Zwischenlage (7), die aus einem Vliesstoff oder einem Faservlies gebildet wird, und rPP als Hauptkomponente umfasst, wobei die wenigstens eine Zwischenlage (7) zwischen der Stützlage (8) und der Feinfilterlage (6) und/oder zwischen der Feinfilterlage (6) und der Schutzlage (4) angeordnet ist, und wobei wobei die Fasern oder Filamente des Vliesstoffes oder Faservlieses der wenigstens einen Zwischenlage (7) einen mittleren Durchmesser von mehr als 5 µm, insbesondere zwischen 10 µm und 100 µm, aufweisen; und
Konfektionieren des Vliesstofflaminats zu einem Staubsaugerfilterbeutel.

## Claims

1. A vacuum cleaner filter bag having a bag wall (1) comprising:
a backing layer (8) comprising recycled polyethylene terephthalate, rPET;
a fine filter layer (6) made of a meltblown nonwoven fabric comprising polypropylene, PP, PET and/or recycled polypropylene, rPP; and
a capacitance layer (5) made of a nonwoven fabric comprising rPET, recycled textile material, TLO, and/or rPP;
wherein said bag wall (1) moreover comprises at least one intermediate layer (7) formed by a nonwoven fabric or a fiber web and comprises rPP as a main component;
wherein the at least one intermediate layer (7) is arranged between the backing layer (8) and the fine filter layer (6) and/or between the fine filter layer (6) and the capacitance layer (5); and
wherein the fibers or filaments of the nonwoven fabric or the fiber web of the at least one intermediate layer (7) have an average diameter of more than 5 µm, in particular between 10 µm and 100 µm.

2. The vacuum cleaner filter bag according to claim 1, wherein the at least one intermediate layer (7) is made of a staple fibre nonwoven fabric or a staple fiber web or an extrusion nonwoven fabric or an extrusion fiber web.

3. The vacuum cleaner filter bag according to one of the preceding claims, wherein the air permeability of the at least one intermediate layer (7) is more than 2000 l/m²/s, in particular more than 4000 l/m²/s, particularly more than 8000 l/m²/s.

4. The vacuum cleaner filter bag according to one of the preceding claims, wherein the weight per unit area of the at least one intermediate layer (7) is between 5 and 50 g/m².

5. The vacuum cleaner filter bag according to one of the preceding claims, wherein the material of the at least one intermediate layer (7) has a melt flow index of less than 100 g/10 min, in particular less than 50 g/10 min.

6. The vacuum cleaner filter bag according to one of the preceding claims, wherein the at least one intermediate layer (7) is directly adjacent to the fine filter layer (6).

7. The vacuum cleaner filter bag according to one of the preceding claims, wherein a protective layer (4) adjoins the capacitance layer (5) towards the interior of the bag which is made of a non-woven fabric comprising a recycled plastic.

8. The vacuum cleaner filter bag according to claim 7, wherein the protective layer (4) is formed in correspondence with the intermediate layer (7).

9. The vacuum cleaner filter bag according to any of the preceding claims, wherein the backing layer is a spun bonded fabric made of rPET.

10. The vacuum cleaner filter bag according to one of the preceding claims, wherein the non-woven fabric of the at least one intermediate layer (7) comprises bicomponent fibers, in particular those in which the core is made of rPET and the sheath is made of rPP or vice versa.

11. A method for manufacturing a vacuum cleaner filter bag, comprising the following steps:
providing a nonwoven laminate comprising:
a backing layer (8) comprising recycled polyethylene terephthalate, rPET;
a fine filter layer (6) made of a meltblown nonwoven fabric comprising polypropylene, PP, PET and/or recycled polypropylene, rPP;
a capacitance layer (5) made of a nonwoven fabric comprising rPET, recycled textile material, TLO, and/or rPP;
at least one intermediate layer (7) formed from a nonwoven fabric or a fiber web and comprising rPP as a main component, wherein the at least one intermediate layer (7) is arranged between the backing layer (8) and the fine filter layer (6) and/or between the fine filter layer (6) and the capacitance layer (5), and wherein the fibers or filaments of the nonwoven fabric or the fiber web of the at least one intermediate layer (7) have an average diameter of more than 5 µm, in particular between 10 µm and 100 µm; and
making up a vacuum cleaner filter bag from the non-woven laminate.

12. The method according to claim 11, wherein the making up from the nonwoven laminate comprises forming at least one weld seam, and the method further comprises precompressing the nonwoven laminate in at least one region where the at least one weld seam is formed.

13. The method according to claim 12, wherein the precompressing is carried out by ultrasonic welding, thermal welding or pressurization.

14. The method according to any one of claims 12 to 13, wherein during precompressing the sonotrode is arranged on the backing layer (8) or the side of the laminate closer to the backing layer (8).

15. A vacuum cleaner filter bag having a bag wall (1) comprising:
a backing layer (8) comprising recycled polyethylene terephthalate, rPET;
a fine filter layer (6) made of a meltblown nonwoven fabric comprising polypropylene, PP, PET and/or recycled polypropylene, rPP; and
a protective layer (4) made of a non-woven fabric comprising a recycled plastic;
wherein said bag wall (1) moreover comprises at least one intermediate layer (7) formed by a nonwoven fabric or a fiber web and comprises rPP as a main component;
wherein the at least one intermediate layer (7) is arranged between the backing layer (8) and the fine filter layer (6) and/or between the fine filter layer (6) and the protective layer (4); and
the fibers or filaments of the nonwoven or fibrous web of the at least one intermediate layer (7) have an average diameter of more than 5 µm, in particular between 10 µm and 100 µm.

16. A method for manufacturing a vacuum cleaner filter bag, comprising the following steps:
providing a nonwoven laminate comprising:
a backing layer (8) comprising recycled polyethylene terephthalate, rPET;
a fine filter layer (6) made of a meltblown nonwoven fabric comprising polypropylene, PP, PET and/or recycled polypropylene, rPP;
a protective layer (4) made of a non-woven fabric comprising a recycled plastic; and
at least one intermediate layer (7) formed from a nonwoven fabric or a fiber web and comprising rPP as a main component, wherein the at least one intermediate layer (7) is arranged between the backing layer (8) and the fine filter layer (6) and/or between the fine filter layer (6) and the protective layer (4), and wherein the fibers or filaments of the nonwoven fabric or the fiber web of the at least one intermediate layer (7) have an average diameter of more than 5 µm, in particular between 10 µm and 100 µm; and
making up a vacuum cleaner filter bag from the non-woven laminate.

## Revendications

1. Sac filtrant pour aspirateur ayant une paroi de sac (1) comprenant une couche de support (8) comprenant du polyéthylène téréphtalate recyclé, rPET;
une fine couche filtrante (6) d'un non-tissé soufflé à l'état fondu comprenant du polypropylène, PP, PET et/ou du polypropylène recyclé, rPP; et
une couche de capacité (5) d'un tissu non tissé comprenant du rPET, du matériau textile recyclé, du TLO et/ou du rPP;
dans lequel ladite paroi de sac (1) comprend en outre au moins une couche intermédiaire (7) formée d'un tissu non tissé ou d'un tissu fibreux et comprend du rPP comme composant principal;
dans laquelle ladite au moins une couche intermédiaire est disposée entre la couche de support (8) et la couche de filtre fin (6) et/ou entre la couche de filtre fin (6) et la couche de capacité (5); et dans laquelle les fibres ou filaments du non-tissé ou du tissu fibreux de ladite au moins une couche intermédiaire (7) ont un diamètre moyen supérieur à 5 µm,
en particulier entre 10 µm et 100 µm.

2. Sac filtrant pour aspirateur selon la revendication 1, dans lequel ladite au moins une couche intermédiaire (7) est constituée d'un non-tissé de fibres discontinues ou d'un tissu de fibres discontinues ou d'un tissu fibreux d'extrusion ou d'un non-tissé d'extrusion.

3. Sac filtrant pour aspirateur selon l'une des revendications précédentes, dans lequel la perméabilité à l'air de ladite au moins une couche intermédiaire (7) est supérieure à 2000 l/m²/s, en particulier supérieure à 4000 l/m²/s, en particulier supérieure à 8000 l/m²/s.

4. Sac filtrant pour aspirateur selon l'une des revendications précédentes, dans lequel le poids par unité de surface de ladite au moins une couche intermédiaire (7) est compris entre 5 et 50 g/m².

5. Sac filtrant pour aspirateur selon l'une des revendications précédentes, dans lequel le matériau de ladite au moins une couche intermédiaire (7) présente un indice de fusion inférieur à 100 g/10 min, en particulier inférieur à 50 g/10 min.

6. Sac filtrant d'aspirateur selon l'une des revendications précédentes, dans lequel ladite au moins une couche intermédiaire (7) est directement adjacente à la couche filtrante fine (6).

7. Sac filtrant pour aspirateur selon l'une des revendications précédentes, dans lequel la couche de capacité (5) vers l'intérieur du sac est suivie d'une couche de protection (4), qui est faite d'un tissu non tissé comprenant un plastique recyclé.

8. Sac filtrant pour aspirateur selon la revendication 7, dans lequel la couche de protection (4) est formée selon la couche intermédiaire (7).

9. Sac filtrant pour aspirateur selon l'une des revendications précédentes, dans lequel la couche de support est un tissu en rPET filé-lié.

10. Sac filtrant pour aspirateur selon l'une des revendications précédentes, dans lequel le non-tissé de ladite au moins une couche intermédiaire (7) comprend des fibres bicomposantes, en particulier celles dont le noyau est formé de rPET et la gaine de rPP ou vice versa.

11. Procédé de fabrication d'un sac filtrant pour aspirateur, comprenant les étapes suivantes:
fournir un laminé non tissé comprenant:
une couche de support (8) comprenant du polyéthylène téréphtalate recyclé, rPET;
une fine couche filtrante (6) d'un non-tissé soufflé à chaud comprenant du polypropylène, PP, PET et/ou du polypropylène recyclé, rPP;
une couche de capacité (5) d'un tissu non tissé comprenant du rPET, du matériau textile recyclé, du TLO et/ou du rPP;
au moins une couche intermédiaire (7) formée d'un non-tissé ou d'un tissu fibreux et comprenant du rPP comme composant principal, dans lequel ladite au moins une couche intermédiaire (7) est disposée entre la couche de support (8) et la couche de filtre fin (6) et/ou entre la couche de filtre fin (6) et la couche de capacité (5), et dans lequel les fibres ou les filaments du non-tissé ou du tissu fibreux desdites au moins une couche intermédiaire (7) ont un diamètre moyen supérieur à 5 µm, en particulier entre 10 µm et 100 µm; et
transformer le laminé non tissé en sac filtrant pour aspirateur.

12. Procédé selon la revendication 11, dans lequel la finition du stratifié non tissé comprend la formation d'au moins un joint de soudure, et le procédé comprend en outre le précompactage du stratifié non tissé dans au moins une région où le au moins un joint de soudure est formé.

13. Procédé selon la revendication 12, dans lequel la précompression est effectuée par soudage par ultrasons, soudage thermique ou par pressurisation.

14. Procédé selon l'une quelconque des revendications 12 à 13, dans lequel la sonotrode est disposée sur la couche de support (8) ou sur le côté du stratifié le plus proche de la couche de support (8) pendant le précompactage.

15. Sac filtrant pour aspirateur ayant une paroi de sac (1) comprenant:
une couche de support (8) comprenant du polyéthylène téréphtalate recyclé, rPET;
une fine couche filtrante (6) d'un non-tissé soufflé à l'état fondu comprenant du polypropylène, PP, PET et/ou du polypropylène recyclé, rPP; et
une couche protectrice (4) constituée d'un tissu non tissé comprenant un plastique recyclé;
dans lequel ladite paroi de sac (1) comprend en outre au moins une couche intermédiaire (7) formée d'un tissu non tissé ou d'un tissu fubreux et comprend du rPP comme composant principal;
dans lequel la couche intermédiaire (7), au nombre d'au moins une, est disposée entre la couche de support (8) et la couche de filtre fin (6) et/ou entre la couche de filtre fin (6) et la couche de protection (4) les fibres ou filaments du non-tissé ou du tissu fibreux de ladite au moins une couche intermédiaire (7) ayant un diamètre moyen supérieur à 5 µm, en particulier entre 10 µm et 100 µm.

16. Procédé de fabrication d'un sac filtrant pour aspirateur, comprenant les étapes suivantes:
fournir un laminé non tissé comprenant:
une couche de support (8) comprenant du polyéthylène téréphtalate recyclé, rPET;
une fine couche filtrante (6) d'un non-tissé soufflé à chaud comprenant du polypropylène, PP, PET et/ou du polypropylène recyclé, rPP;
une couche de protection (4) constituée d'un tissu non tissé comprenant un plastique recyclé; et
au moins une couche intermédiaire (7) constituée d'un non-tissé ou d'un tissu fibreux et comprenant du rPP comme composant principal, dans laquelle ladite au moins une couche intermédiaire (7) est disposée entre la couche de support (8) et la couche de filtre fin (6) et/ou entre la couche de filtre fin (6) et la couche de protection (4), et dans laquelle les fibres ou filaments du non-tissé ou du tissu fibreux de ladite au moins une couche intermédiaire (7) ont un diamètre moyen supérieur à 5 µm, en particulier entre 10 µm et 100 µm; et
transformer le laminé non tissé en sac filtrant pour aspirateur.
